# EUROPÄISCHE PATENTANMELDUNG

(11) **EP 0 787 975 A1**
(43) Veröffentlichungstag der Anmeldung: **06.08.1997**
(21) Anmeldenummer: 97100328.0
(22) Anmeldetag: 10.01.1997
(51) Int. Cl.: G01F 1/58

(54) **Magnetisch-induktiver Durchflussmesser**

(30) Priorität: 05.02.1996 DE 19604004
(71) Anmelder: ELSAG INTERNATIONAL N.V., NL-1102 BR Amsterdam (NL)
(72) Erfinder: Schwiderski, Hans W., 37176 Nörten-Hardenberg (DE)
(74) Vertreter: Tiesmeyer, Johannes, Dr.

(57) **Zusammenfassung**

Es wird ein magnetisch-induktiver Durchflußmesser vorgeschlagen, der ein Meßrohr, eine Elektromagneteinrichtung mit wenigstens einer elektrischen Leiterschleifenanordnung zur Erzeugung eines das Meßrohr quer zu dessen Rohrlängsachse durchsetzenden Magnetfeldes und wenigstens zwei Meßelektroden (9,9') aufweist, die quer zur Längsachse des Meßrohres einander gegenüberliegend derart angeordnet sind, daß mit ihnen eine aufgrund der quer zu dem Magnetfeld verlaufenden Strömung einer das Meßrohr durchfließenden Flüssigkeit induzierte Meßspannung abgegriffen werden kann. Die erfindungsgemäße Besonderheit besteht insbesondere darin, daß die elektrische Leiterschleifenanordnung (7,7') aus einem elektrisch leitfähigen, an der Innenseite oder an der Außenseite des Meßrohrkörpers (5) angebrachten Blechteil besteht, das mit wenigstens einem Ausschnitt (13) als innenliegende Begrenzung des um den Ausschnitt herum in dem Blechmaterial verlaufenden Leiterschleifenstrompfades versehen ist.

Der erfindungsgemäße Durchflußmesser weist einen einfachen Aufbau der Elektromagnet-Einrichtung auf und ermöglicht eine Rechteck-Magnetfelderregung mit vergleichsweise hoher Frequenz selbst bei Meßrohren mit großen Nennweiten (z.B. DN > 300), da die Leiterschleifenanordnung eine kleine Induktivität besitzt.

## Beschreibung

Die Erfindung betrifft einen magnetisch-induktiven Durchflußmesser mit einem Meßrohr, einer Elektromagnet-Einrichtung mit einer elektrischen Leiterschleifenanordnung zur Erzeugung eines das Meßrohr quer zu dessen Rohrlängsachse durchsetzenden Magnetfeldes und wenigstens zwei Meßelektroden, die quer zur Längsachse des Meßrohres einander gegenüberliegend derart angeordnet sind, daß mit ihnen eine aufgrund der quer zu dem Magnetfeld verlaufenden Strömung einer das Meßrohr durchfließenden Flüssigkeit induzierte Maßspannung abgegriffen werden kann.

Bei einem magnetisch-induktiven Durchflußmesser der eingangs genannten Art wird der Effekt ausgenutzt, daß in der das Meßrohr quer zu dem Magnetfeld durchströmenden, eine elektrische Mindestleitfähigkeit aufweisenden Flüssigkeit eine Spannung induziert wird, die von der Strömungsgeschwindigkeit abhängt und über die Meßelektroden abgegriffen werden kann. Die detektierte Meßspannung wird üblicherweise ausgewertet, um Durchflußmengen-Informationen bereitzustellen.

Unter dem Begriff Flüssigkeit sollen im Rahmen der vorliegenden Anmeldung auch Breie, Schlämme, Pasten und dgl. fallen.

Bei den konventionellen magnetisch-induktiven Durchflußmessern weist die Elektromagnet-Einrichtung zur Erzeugung des Magnetfeldes üblicherweise zwei oder mehrere Leiterschleifenanordnungen in Form gewickelter Spulen mit einer großen Anzahl von Windungen auf. Diese Spulen sind in den meisten Fällen außen am Meßrohr einander diametral gegenüberliegend angeordnet. Eine solche Anordnung der Spulen am Außenumfang des Meßrohrs bedingt jedoch, daß das Meßrohr aus einem magnetisch zum Rohrinneren hin nicht abschirmenden Material besteht. Insbesondere für Meßrohre mit größeren Nennweiten werden jedoch auch übliche, magnetisierbare Stahlsorten verwendet. Bei solchen Meßrohren sind die Elektromagnet-Spulen entweder im Rohrinneren oder in Ausnehmungen der Rohrwand so untergebracht, daß das Magnetfeld das Rohrinnere durchsetzen kann.

Aus der DE-26 19 870 A1 ist ein magnetisch-induktiver Durchflußmesser bekannt, bei dem die gewickelten Spulen an der Innenwand eines Meßrohres aus magnetisierbarem Stahl angeordnet und dort in gesonderten Spulengehäusen aus nicht-magnetisierbarem Material untergebracht sind. Die Spulengehäuse ihrerseits sind in einem zylindrischen Einsatz eingebettet, der mit seinem Außenumfang am Innenumfang des Stahlrohres anliegt. Der zylindrische Einsatz ist an seinem Innenumfang mit einer Auskleidung versehen, die den Durchflußquerschnitt des Meßrohres begrenzt. Durch die Einbettung der Spulenkörper wird erreicht, daß die Spulenkörper das Strömungsverhalten der Flüssigkeit am Meßort nicht in einer die Messung grob verfälschenden Weise ändern. Allerdings ist der bei dem Durchflußmesser nach der DE 26 19 870 A1 hierzu getriebene Aufwand relativ groß. Insbesondere ist darauf hinzuweisen, daß der freie Meßrohrquerschnitt durch die Maßnahmen zur Einbettung der Spulen in einem nicht-magnetischen Material in einem durchaus beachtlichen Maße verkleinert wird.

Bei der Durchflußmengenmessung mit magnetisch-induktiven Durchflußmessern ist es auch bereits üblich geworden, mittels der Elektromagnet-Einrichtung ein magnetisches Wechselfeld bzw. ein zeitabhängiges Magnetfeld durch entsprechende Erregung der Spulen zu erzeugen, um Störungen, die der Meßspannung überlagert sind, zu unterdrücken bzw. auf der Auswerteseite zu eliminieren und Meßfehler zu vermeiden. Eine bekannte Möglichkeit der Erzeugung eines zeitabhängigen Magnetfeldes besteht darin, die Spulen mit Rechtecksignalen bestimmter Frequenz zu erregen.

Bei starken Elektromagneten mit großer Spulenwindungszahl, wie sie für Meßrohre mit großen Nennweiten, beispielsweise DN > 300, verwendet werden, tritt jedoch das Problem auf, daß aufgrund der entsprechend großen Induktivitäten der Spulenwickel die Zeitkonstanten hinsichtlich der Ausbildung eines für die Messung ausreichend starken Magnetfeldes so groß sind, daß die Durchflußmengenmeßgeschwindigkeit stark reduziert wird und die Vorteile der zeitabhängigen Erregung des Magnetfeldes nur noch in eingeschränktem Maße ausgenutzt werden können.

Aus der US 4 050 303 ist ein magnetisch-induktiver Durchflußmesser bekannt, bei dem eine Leiterschleifenanordnung der Elektromagnet-Einrichtung durch dünne Kupfer-Leiterbahnen realisiert ist, welche auf einem isolierenden Träger nach einem Leiterbahn-Druckverfahren hergestellt worden sind. Das Leiterschleifenmuster dieser gedruckten Schaltung ist außerordentlich komplex und erfordert eine Vielzahl von Stromanschlußpunkten für die Stromversorgung. Es soll die Abhängigkeit der Empfindlichkeit des Durchflußmessers vom Geschwindigkeitsprofil der strömenden Flüssigkeit verringern. Die gedruckte Leiterschleifen-Schaltung ist bei dem Durchflußmesser nach der US 4 050 303 am Innenumfang eines das eigentliche Meßrohr in radialem Abstand umgebenden Trägerrohres angeordnet.

Abgesehen davon, daß die Herstellung des komplexen Leiterbahnmusters und die Maßnahmen zur Verdrahtung der zahlreichen Stromanschlußpunkte aufwendig sind, dürfte die Leiterschleifenanordnung nach der US 4 050 303 nicht dazu geeignet sein, die bei Meßrohren mit großem Nenndurchmesser geforderten starken Magnetfelder zu erzeugen, da die hierzu erforderlichen hohen Ströme die dünnen Leiterbahnen überfordern würden.

Aus der US 3 924 466 ist ein weiteres Beispiel eines magnetisch-induktiven Durchflußmessers bekannt, bei dem die Leiterschleifenanordnung der Elektromagnet-Einrichtung im Sinne einer gedruckten Schaltung durch dünne Leiterbahnen realisiert ist, welche auf einem isolierenden, flexiblen Träger nach einem Leiterbahn-Druckverfahren hergestellt worden sind. Die Leiterbahnen bilden ein Muster aus elektrisch miteinander verbundenen Leiterstreifen, wobei für die Stromversorgung einer betreffenden Leiterstreifenanordnung lediglich zwei Stromanschlußpunkte erforderlich sind. Die als gedruckte Schaltung ausgebildete Leiterschleifenanordnung ist bei dem magnetisch-induktiven Durchflußmesser nach der US 3 924 466 zwischen der Innenwand des Meßrohrkörpers und einer elektrisch isolierenden Rohrauskleidung angeordnet, so daß der Meßrohrkörper - sofern er aus magnetisierbarem Material besteht - die magnetische Rückführung zwischen zwei betreffenden Leiterschleifenanordnungen übernehmen kann, die einander gegenüberliegend am Innenumfang des Meßrohrkörpers angeordnet sind.

In einem Ausführungsbeispiel des magnetisch-induktiven Durchflußmessers nach der US 3 924 466 mit einem nichtmagnetisierbaren Meßrohrkörper ist die in Form einer gedruckten Schaltung realisierte Leiterschleifenanordnung am Außenumfang des Meßrohrkörpers vorgesehen und von einer mehrlagigen Schicht aus magnetisierbarem Material umgeben, die unter weitgehender Vermeidung von Wirbelströmen die magnetische Rückführung übernimmt.

Aus der JP 59-34118 (A) ist ein magnetisch-induktiver Durchflußmesser bekannt, bei dem zur Bildung der Leiterschleifenanordnung mehrere gedruckte Schaltungen der unter Bezugnahme auf die US 3 924 466 genannten Art übereinandergeschichtet sind. Die gedruckten Schaltungen umfassen ein elektrisch isolierendes, blattförmiges Trägermaterial, auf dem eine spiralförmig verlaufende Leiterbahn aufgebracht ist. Die geschichteten gedruckten Schaltungen sind durch entsprechende Verdrahtungen untereinander parallel geschaltet.

Aus der JP 62-255820 (A) ist ein magnetisch-induktiver Durchflußmesser bekannt, bei dem die elektrische Leiterschleifenanordnung Wickelspulen umfaßt, die von einem Flachband aus ferromagnetischem Material durchsetzt sind. Dieses metallische Flachband ist um den Meßrohrkörper herumgewickelt, so daß die Spulen an diametral entgegengesetzten Seiten des Meßrohrkörpers positioniert sind. Die Endabschnitte und ein Abschnitt des als Spulenkern wirkenden und zu einer geschlossenen Schleife um den Meßrohrkörper herumgebogenen Flachbandes sind an polschuhartigen Befestigungselementen aus ferromagnetischem Material befestigt, die am Außenumfang an diametral entgegengesetzten Seiten des Meßrohrkörpers angebracht sind und die aus dem Flachband gebildete magnetische Schleife in radialem Abstand vom Außenumfang des Meßrohrkörpers halten.

Aus der JP 1-178822 (A) ist ein magnetisch-induktiver Durchflußmesser bekannt, bei dem die Leiterschleifenanordnung ein Substrat und ein darauf durch einen Ätzprozeß hergestelltes Leiterbahnmuster in Form einer spiralförmigen Leiterbahn umfaßt.

Aus der EP 0 682 233 A2 ist ein in das Meßrohr eines magnetisch-induktiven Durchflußmessers einsetzbares Rohrauskleidungselement mit darin eingebetteten Flachspulen bekannt, die betreffende Leiterschleifenanordnungen bilden.

Aus dem deutschen Gebrauchsmuster Nr. 19 24 152 ist ein magnetisch-induktiver Durchflußmesser bekannt, bei dem stabförmige Leiter zu einer korbähnlichen Umhüllung des Meßrohrkörpers geformt sind, um eine Leiterschleifenanordnung einer betreffenden Elektromagnet-Einrichtung zu bilden. Die außen am Meßrohr angebrachte Leiterschleifenanordnung ist von einer Schutzummantelung aus Beton, Kunststoff oder dergleichen umgeben. Zur Erzeugung eines Magnetfeldes wird die Leiterschleifenanordnung aus einer Niederspannung abgebenden Wechselstromquelle gespeist.

Zum allgemeinen Stand der Technik wird ferner auf die US 4 428 241 und die JP 5-107091 (A) verwiesen, die magnetisch-induktive Durchflußmesser betreffen, bei denen flächenhafte Leitungsstrukturen in Form gedruckter Schaltungen verwendet werden, um Signalstörungen zu unterdrücken bzw. Spulen der Elektromagnetanordnung mit Strom zu versorgen.

Der Erfindung liegt die Aufgabe zugrunde, einen magnetisch-induktiven Durchflußmesser der eingangs genannten Art bereitzustellen, der eine mit einfachen Mitteln herstellbare Leiterschleifenanordnung aufweist, die ohne nennenswerte Platzinanspruchnahme am Innenumfang - oder bei einem nicht-magnetisierbaren Meßrohr - am Außenumfang des Meßrohres angebracht sein kann und die darüber hinaus zur Erzeugung von bei Meßrohren mit großer Nennweite erforderlichen starken Magnetfeldern verwendet werden kann, ohne die Meßgeschwindigkeit des Durchflußmessers bei Rechteckerregung des Magnetfeldes in einem nicht akzeptablen Maße zu verringern.

Zur Lösung dieser Aufgabe wird erfindungsgemäß vorgeschlagen, daß die elektrische Leiterschleifenanordnung aus einem elektrisch leitfähigen, an der Innenseite oder an der Außenseite des Meßrohrkörpers bzw. bei einem magnetisierbaren Meßrohrkörper an der Innenseite des Meßrohrkörpers angeordneten Blechteil besteht, das mit wenigstens einem Ausschnitt als innenliegende Begrenzung eines um den Ausschnitt herum in dem Blechmaterial verlaufenden Leiterschleifen-Strompfades versehen ist.

Die Leiterschleifenanordnung nach der Erfindung läßt sich mit einem mit einfachen Mitteln herstellbaren Blechzuschnitt realisieren. Der Ausschnitt in dem Blechteil kann durch Stanzen, Schneiden, Sägen oder sonstwie hergestellt sein. Es geht lediglich darum, eine entsprechende Aussparung in dem Blechteil vorzusehen.

Eine solche Leiterschleife aus Blech gibt dem Fachmann die Möglichkeit, durch entsprechende Wahl der Form des Ausschnittes, die Lage des Ausschnittes innerhalb des Blechteils, die Form des Umrisses des Blechteils, die Dicke des Blechteils und die Positionierung des Blechteils relativ zu dem Meßrohrkörper je nach Anforderung an die Qualität des Durchflußmessers eine Magnetfeldverteilung über den Querschnitt des Meßrohres zu realisieren, die dahingehend optimiert ist, daß in bezug auf den Meßspannungsabgriff an den Meßelektroden alle Flächenelemente des Rohrquerschnittes nahezu gleich bewertet werden, wobei insbesondere zu diesem Zweck vorgeschlagen wird, daß vorzugsweise zwei Leiterschleifenanordnungen nach der Erfindung an diametral entgegengesetzten Stellen des Meßrohres angeordnet sind.

Das Blechteil kann ohne nennenswerte Platzinanspruchnahme am Innenumfang des im folgenden auch einfach als Rohrkörper bezeichneten Meßrohrkörpers befestigt sein und eine der Krümmung des Innenumfangs des Rohrkörpers entsprechende Krümmung aufweisen. Vorzugsweise ist das Blechteil in der Auskleidung des Rohrkörpers eingebettet. Diese Auskleidung kann vergleichsweise dünnwandig sein, so daß der freie Querschnitt des Rohrkörpers nur unwesentlich verringert wird. Ferner kann der Rohrkörper auch eine das Blechteil aufnehmende Ausnehmung am Innenumfang haben. Eine solche Ausnehmung erleichtert das Zentrieren der Leiterschleifenanordnung relativ zu den Meßelektroden.

Ein wesentlicher Vorteil der Verwendung einer Leiterschleifenanordnung aus einem Blechteil besteht darin, daß bei vergleichsweise kleiner Selbstinduktivität der Leiterschleifenanordnung starke elektrische Ströme verwendet werden können, um entsprechend starke Magnetfelder in dem Meßrohr zu erzeugen. Damit kann das Magnetfeld bei Rechteckerregung mit einer vergleichsweise kleinen Zeitkonstante aufgebaut werden, was höhere Erregungsfrequenzen und somit kleinere Meßzeitintervalle ermöglicht.

Die Möglichkeit der Nutzung höherer Ströme ist insbesondere auch aufgrund der Tatsache gegeben, daß die Leiterschleifenanordnung eine im Verhältnis zum stromführenden Querschnitt sehr große kühlende Oberfläche hat und die Verlustwärme daher problemlos abgeführt werden kann. Bei herkömmlichen Drahtspulen ergeben sich bei Hochstrombetrieb in aller Regel thermische Probleme, da die Isolierlacke nur eine begrenzte Hochtemperaturbeständigkeit aufweisen.

Ein weiterer Vorteil der Erfindung liegt darin, daß die zur Erzeugung der gewünschten Magnetfelder erforderlichen Ströme mit sehr kleinen elektrischen Spannungen hervorgerufen werden können, so daß hinsichtlich der elektrischen Abschirm- und Isolationsmaßnahmen keine großen Anforderungen zu stellen sind. Hierdurch wird inbesondere die Herstellung explosionsgeschützter Geräte erleichtert, da bei den niedrigen Spannungen keine zündfähigen Funken entstehen. Ein Impulsbetrieb mit niedrigen Spannungen wirkt sich darüber hinaus weniger störend auf den elektrischen Meßkreis an der Meßauswerteseite aus.

Besteht der Rohrkörper aus einem nichtmagnetisierbaren Material, wie z.B. Kunststoff, Beton, keramischen Stoffen oder korrosionsbeständigen CrNi-Stählen, so kann die jeweilige Leiterschleifenanordnung aus Blech alternativ auch an der Außenseite des Rohrs angeordnet sein.

Soll das Blechteil am Umfang des Meßrohrkörpers (innen oder außen) flächig anliegen, so kann die entsprechende Krümmung des Blechteils an Ort und Stelle bei der Anbringung an den Meßrohrkörper vorgenommen werden. Die Befestigung des Blechteils an dem Meßrohr kann beispielsweise durch Kontaktbolzen erfolgen, die gleichzeitig als Anschlußklemmen für Verbindungsleitungen zur Stromquelle herangezogen werden können.

Das Blechteil kann grundsätzlich aus ursprünglich gesonderten Blechabschnitten zusammengesetzt sein, die beispielsweise durch Schweißen, Hartlöten oder dgl. zusammengefügt wurden. Bevorzugt ist das Blechteil jedoch aus einem bereits ursprünglich einteilig zusammenhängenden Blech gebildet.

Als Blechmaterial kommt vorzugsweise Kupfer oder eine elektrisch gut leitende Kupferlegierung in Frage. Gute Ergebnisse können jedoch auch mit einem Blechteil aus Aluminium bzw. einer Aluminiumlegierung erhalten werden.

Die Blechdicke sollte insbesondere in Abhängigkeit von der Nennweite des Meßrohres in einem Bereich von 0,5 - 3,5 mm liegen.

Sehr gute Ergebnisse hinsichtlich der gewünschten Magnetfeldverteilung können erzielt werden, wann der Umriß des Blechteils in bezug auf eine Längsmittenlinie des Zuschnitts symmetrisch ist, die in einer orthogonal zur Längsachse des Meßrohres liegenden Ebene verläuft, auf der die Meßelektroden liegen, wobei der Ausschnitt einen entlang der Längsmittenlinie verlaufenden, in Bezug auf die Längsmittenlinie symmetrischen Abschnitt aufweist. Gemäß einer herstellungstechnisch günstigen Variante hat das Blechteil einen länglichen Zuschnitt mit insbesondere rechteckigem Umriß, wobei der in bezug auf die Längsmittenlinie symmetrische Abschnitt des Ausschnittes ein Schlitz mit im wesentlichen geraden Rändern ist.

In einer bevorzugten Ausgestaltung ist das Blechteil insgesamt ein im wesentlichen symmetrisches Gebilde, dessen Symmetrie lediglich durch einen dem Ausschnitt zugehörigen Unterbrechungsabschnitt gestört ist, der von dem Ausschnitt ausgehend zu einem Randbereich des Blechteils hin offen ist und die von dem Blechteil gebildete und um den Ausschnitt herum verlaufende Leiterschleife unterbricht, wobei das Blechteil an benachbarten Stellen beiderseits dieser Unterbrechung jeweils mit der Versorgungsstromquelle verbunden ist. Bei dieser Konstruktion reichen zwei Anschlußpunkte für die Verbindung mit der Stromquelle aus.

Eine bevorzugte Ausführungsform sieht vor, daß die Blechteil-Leiterschleifenanordnung als Sekundär-Leiterschleife eines Transformators ausgebildet ist. Hierzu weist der Ausschnitt vorzugsweise einen Sekundärabschnitt auf, der vom Kern des Transformators durchsetzt ist, so daß der um den Ausschnitt herum verlaufende Leiterschleifen-Strompfad einen Sekundärstromkreis des Transformators bildet. Bei einer derartigen Konstruktion wird mit einfachen Mitteln erreicht, daß unter Verwendung des Transformators hohe Ströme in dem Leiterschleifen-Strompfad induziert werden können. Die vorstehend genannte Variante bringt insbesondere bei außen am Meßrohr vorgesehenem Blechteil konstruktionstechnische Vorteile, wobei elektrische Kontaktprobleme eliminiert sind.

Hinzuzufügen ist noch, daß das Blechteil gewünschtenfalls unmittelbar mit dem Meßrohrkörper ohne besondere Isolierungszwischenschicht in Verbindung stehen kann, wenn die elektrische Leitfähigkeit des Rohrkörpermaterials wesentlich geringer ist als die des Blechteils, und zwar auch dann, wenn der Meßrohrkörper aus Metall besteht.

Im Falle eines magnetisierbaren Rohrkörpers und zwei insbesondere diametral einander gegenüberliegend an der Rohrinnenseite angeordneten Leiterschleifenanordnungen kann der Rohrkörper nach Art eines Jochs die magnetische Rückführung übernehmen.

Sofern der Rohrkörper nicht magnetisch ist, kann die magnetische Rückführung beispielsweise über ein an den radial außen liegenden Flächen der Blechteil-Leiterschleifenanordnungen ggf. über einen Isolationsfilm anliegendes Magnetblech realisiert werden, das am Innenumfang des Rohrkörpers umlaufend angeordnet ist.

Wenngleich es im Rahmen theoretischer Überlegungen möglich sein kann, einer Blechteil-Leiterschleifenanordnung nach der Erfindung eine herkömmliche Spulenanordnung oder eine Permanentmagnetanordnung an der gegenüberliegenden Seite des Rohres gegenüberzustellen, so wird der erfindungsgemäß angestrebte Erfolg jedoch in einem weitaus besseren Maße erzielt, wenn entsprechende, einander gegenüberliegende Leiterschleifenanordnungen ausschließlich aus erfindungsgemäßen Blechteilen gebildet sind.

Eine besonders bevorzugte Weiterbildung der Erfindung sieht vor, daß zwei derartige Leiterschleifenanordnungen aus einem einteilig zusammenhängenden Blechteil gebildet sind, deren Ausschnitte in der Montageanordnung am Meßrohr über den Rohrdurchmesser hinweg einander gegenüberliegen. Die Stromeinspeisung kann hierbei durch zwei beiden Leiterschleifen gemeinsame Anschlußpunkte erfolgen.

Insbesondere bei nichtmetallischen Rohrkörpern kann das Blechteil auch eine mechanisch aussteifende Funktion des Rohrkörpers erfüllen.

Bevorzugte Ausführungsbeispiele der Erfindung werden nachstehend unter Bezugnahme auf die Zeichnungen näher erläutert.

Fig. 1 zeigt in einer vereinfachten perspektivischen Darstellung einen Abschnitt eines Meßrohrs mit zwei am Meßrohr einander gegenüberliegenden Blechteil-Leiterschleifenanordnungen.

Fig. 2a - 2d zeigen Beispiele für die Gestaltung des Zuschnitts von einteilig zusammenhängenden Blechteil-Leiterschleifenanordnungen nach der Erfindung.

Fig. 3a - 3b zeigen Beispiele zweier Blechteil-Leiterschleifenanordnungen, die aus verschiedenen Blechabschitten bzw. Blechstreifen zusammengesetzt worden sind, im ungebogenen Zustand.

Fig. 4a zeigt in einer Querschnittsdarstellung entsprechend der Schnittebene a-a in Fig. 4b einen herausgebrochenen Abschnitt eines Meßrohrs mit außenliegender Blechteil-Leiterschleifenanordnung.

Fig. 4b zeigt einen Längsschnitt entsprechend der Schnittebene b-b in Fig. 4a durch das Meßrohr gemäß Fig. 4a, wobei auch in Fig. 4b nur ein weggebrochen dargestellter Abschnitt des Meßrohrs gezeigt ist.

Fig. 5 - 7 zeigen weitere Ausführungsbeispiele eines Meßrohrs eines Durchflußmessers nach der Erfindung in einer der Fig. 4b entsprechenden Ansicht.

Fig. 8a - 8b zeigen Zuschnitte von Blechteil-Leiterschleifenanordnungspaaren, die jeweils aus einem einteilig zusammenhängenden Blechteil bestehen.

Fig. 9 zeigt in einer vereinfachten Darstellung eine Blechteil-Leiterschleifenanordnung als Sekundärstromkreis eines Transformators.

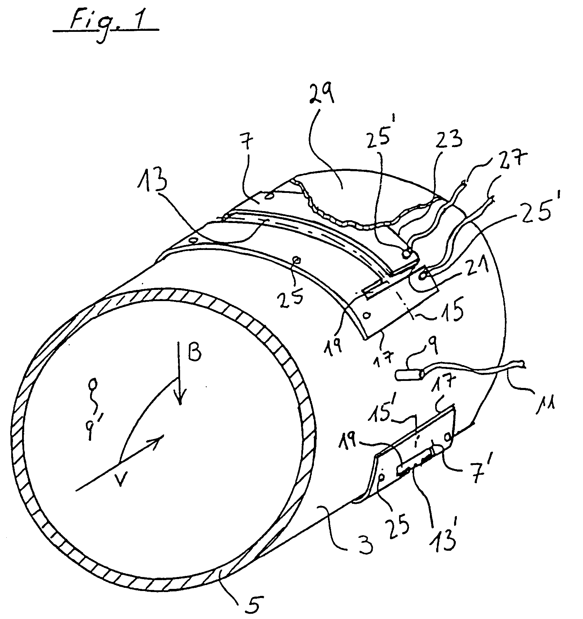

Fig. 1 zeigt einen Abschnitt eines Meßrohrs 3 eines magnetisch-induktiven Durchflußmessers nach der Erfindung. Der von der Flüssigkeit durchströmte Rohrkörper 5 besteht bei dem in Fig. 1 gezeigten Ausführungsbeispiel aus einem nichtmagnetisierbaren Material und weist an seinem Außenumfang flächig anliegend zwei Blechteil-Leiterschleifenanordnungen 7, 7' auf, die im Meßbetrieb ein den Rohrkörper 5 quer zur Strömungsrichtung v der zumindest in einem geringfügigen Maße elektrisch leitfähigen Flüssigkeit durchsetzendes Magnetfeld (Induktionsflußdichte B) erzeugen, wie dies schematisch durch die Pfeile v, B für eine Momentaufnahme angedeutet ist. Eine aufgrund der quer zu dem Magnetfeld verlaufenden Strömung in der Flüssigkeit induzierte Meßspannung wird über ein Meßelektrodenpaar 9, 9' abgegriffen und in einer (nicht gezeigten) elektronischen Auswerteeinrichtung in Abhängigkeit von der Stärke des B-Feldes, dem Rohrquerschnitt und etwaigen weiteren Einflußgrößen bzw. Auswerte- und Korrekturparametern ausgewertet, um Informationen über die pro Zeiteinheit durch den Rohrkörper 5 strömende Flüssigkeitsmenge bereitzustellen. Mit 11 ist in Fig. 1 eine von der Meßelektrode 9 zur (nicht gezeigten) Auswerteeinrichtung führende Leitung angedeutet. Eine entsprechende Leitung ist auch an der Elektrode 9' angeschlossen.

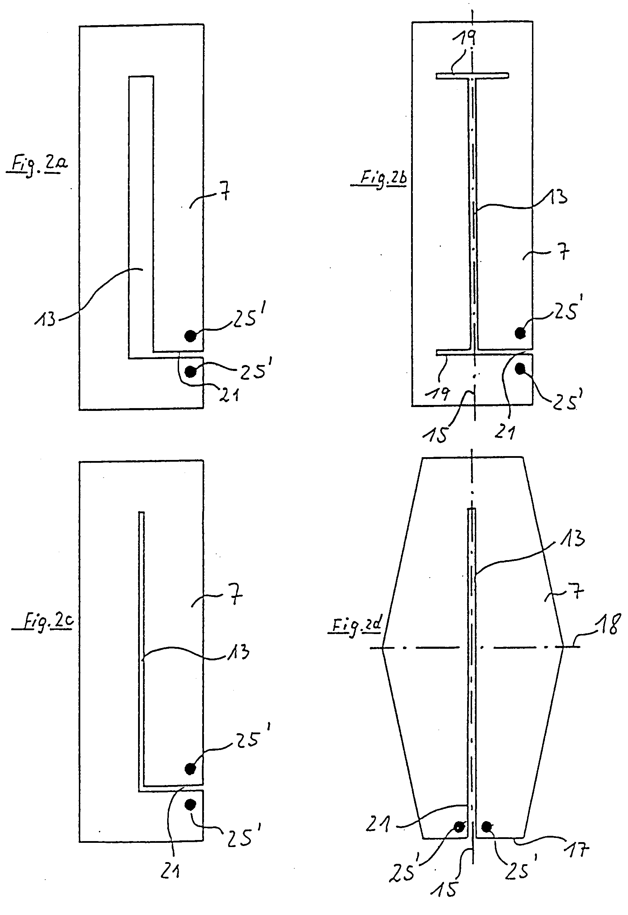

Die Besonderheit des Meßrohrs 3 liegt in den Leiterschleifenanordnungen 7 und 7'. Hierbei handelt es sich jeweils um einen einteilig zusammenhängenden Blechzuschnitt mit rechteckigem Umriß und einem Schlitzausschnitt 13, 13', der sich längs der Längsmittenlinie 15 bzw. 15' des betreffenden Blechteils 7 bzw. 7' erstreckt, jedoch nicht zu den Schmalrändern 17 des betreffenden Blechteils 7 bzw. 7' reicht. Im Beispielsfall weist der Ausschnitt 13 bzw. 13' an seinen Längsenden jeweils einen Querabschnitt 19 auf (vgl. auch Fig. 2b), wobei einer der Querabschnitte 19 durch einen Unterbrechungsabschnitt 21 zum Seitenrand 23 des Blechteils 7 bzw. 7' verlängert ist, um eine Unterbrechung des von dem Blechteil 7 bzw. 7' gebildeten und um den Ausschnitt 13 herum führenden Leiterschleifenstrompfades vorzusehen. Abgesehen von dem Unterbrechungsabschnitt 21 des Ausschnitts 13 ist die Blechteil-Leiterschleifenanordnung 7 bzw. 7' in bezug auf die Längsmittenlinie 15 symmetrisch ausgebildet. In der Montageanordnung am Rohrkörper 5 liegen die Leiterschleifenanordnungen 7 und 7' einander diametral gegenüber, wobei die Längsabschnitte der Ausschnitte 13, 13' auf einer die Elektroden 9, 9' enthaltenden, zur Längsachse des Rohrkörpers 5 orthogonalen Ebene liegen.

Bei 25 sind in Fig. 1 Befestigungspunkte angedeutet, an denen die Blechteile 7 bzw. 7' an dem Rohrkörper 5 mit Schrauben befestigt sind. Die beiden über den Unterbrechungsabschnitt 21 hinweg einander gegenüberliegenden Befestigungen 25' dienen darüber hinaus zum Anklemmen der Verbindungsleitungen 27 zur (nicht gezeigten) Stromquelle. Aufgrund dieser Geometrie wird bei Anlegen einer entsprechenden Spannung über die Leitungen 27 ein Stromfluß um den Ausschnitt 13 herum erzwungen, um das Magnetfeld zu erzeugen. Jedes der Blechteile 7, 7' bildet daher im Beispielsfall eine Einzelwindungs-Leiterschleife, in der sehr hohe Stromdichten erzeugt werden können, um ein entsprechend starkes Magnetfeld zu generieren. Die Blechteile 7 und 7' bestehen vorzugsweise aus elektrisch sehr gut leitendem Kupfer. Die Blechdicke kann beispielsweise bei etwa 1,5 mm liegen. Die Seitenrandabmessungen der Blechteile 7 bzw. 7' längs der Linie 15 und quer dazu können abhängig von der Dimensionierung des Rohrkörpers in der Größenordnung mehrerer Dezimeter liegen. Die jeweilige Leiterschleife hat daher einen vergleichsweise großen stromführenden Querschnitt und gleichzeitig große wärmeabführende Oberflächen. Dieses Konzept ermöglicht es, mit sehr kleinen Spannungen von beispielsweise 20 - 40 mV starke Leiterschleifenströme von beispielsweise 200 A fließen zu lassen und dennoch die thermischen Probleme zu beherrschen. Da die Leiterschleife 7 bzw. 7' im Vergleich zur herkömmlichen Wickelspule eine kleine Induktivität aufweist, kann mit den hohen Strömen ein entsprechend starkes Magnetfeld mit wesentlich kleinerer Zeitkonstante aufgebaut werden. Dies bedeutet, daß die Folgefrequenz bei der Erregung der Leiterschleife 7 bzw. 7' bei der Durchflußmessung mit beispielsweise Rechteckerregung der Leiterschleifen beträchtlich größer sein kann als bei herkömmlichen Wickelspulen-Elektromagneten. Die Durchflußmeßzeitintervalle sind entsprechend kürzer.

Die vergleichsweise kleinere Induktivität der Blechteil-Leiterschleifenanordnung 7 bzw. 7' ermöglicht es, die schnelle Rechteck-Magnetfeldanregung mit hinreichend großer Induktionsflußdichte B auch bei Meßrohren mit großen Nennweiten von beispielsweise DN > 300 anzuwenden und somit die meßtechnischen Vorteile der Rechteckanregung in Fällen groß dimensionierter Anlagen auszunutzen.

Mit 29 ist in Fig. 1 eine (gebrochen dargestellte) elektrisch isolierende Schicht gezeigt. Zwischen der isolierenden Schicht 29 und den Blechteilen 7 bzw. 7' oder außen auf der Schicht 29 kann ein (nicht gezeigtes) Magnetblech vorgesehen sein, das nach Art eines Jochs die magnetische Rückführung zwischen den Blechteilen 7 und 7' übernimmt.

Es ist noch darauf hinzuweisen, daß wegen der geringen Spannungen zur Erzeugung des Magnetfeldes Isolationsprobleme vergleichsweise leicht zu beherrschen sind. Als meßtechnischer Vorteil ist in diesem Zusammenhang ferner zu nennen, daß die Differenz der vergleichsweise kleinen Leiterschleifenspannung zur Meßspannung an den Elektrodne 9, 9' erheblich kleiner ist als bei konventionellen magnetisch-induktiven Durchflußmessern mit Wickelspulen. Bei Geräten mit kapazitivem Meßspannungsabgriff kann der konstruktive Aufwand wesentlich reduziert werden.

In den Fig. 2a - 2d sind die Zuschnitte von vier verschieden ausgestalteten Blechteil-Leiterschleifenanordnungen gezeigt.

Die Leiterschleifenanordnung 7 in Fig. 2a hat einen rechteckigen Umriß mit einem mittig angeordneten Ausschnitt 13, der - abgesehen von seinem Unterbrechungsabschnitt 21 - rechteckig ausgebildet ist. Mit 25' sind die Stromanschlußpunkte bezeichnet.

Der Zuschnitt gemaß Fig. 2b entspricht dem Zuschnitt der Blechteile 7 bzw. 7' in Fig. 1, so daß hinsichtlich der Einzelheiten auf die Beschreibung zur Fig. 1 Bezug genommen werden kann.

Fig. 2c zeigt einen Zuschnitt, der dem der Fig. 2a im wesentlichen entspricht, wobei in Fig. 2c der Ausschnitt 13 jedoch schmaler ausgebildet ist.

Die Leiterschleifenanordnung 7 nach Fig. 2d ist im Hinblick auf die Längsmittenlinie 15 vollkommen symmetrisch ausgebildet und unterscheidet sich von den bisher besprochenen Leiterschleifenanordnungen insbesondere dadurch, daß ihr Zuschnitt nicht rechteckig ist. Ausgehend vom unteren Rand 17 wird der Zuschnitt nach Fig. 2d mit zunehmendem Abstand vom unteren Rand 17 bis zur Mittenlinie 18 breiter, um sich dann zum oberen Rand hin wieder zu verjüngen. Der auf der Längsmittenlinie 15 liegende Ausschnitt 13 ist zum unteren Rand 17 hin offen, wobei die beiden Stromanschlußpunkte 25' in der Nähe des unteren Randes 17 des Blechteils 7 beiderseits des schlitzförmigen Ausschnitts 13 liegen.

Die Figuren 2a - 2d zeigen jeweils einteilig zusammenhängende Blechteile 7 mit einer auf sehr einfache Weise herstellbaren Geometrie. Die gezeigten Zuschnitte sind nur beispielhaft. Je nach Anforderung an das zu erzeugende Magnetfeld kann der Fachmann auch andere Umrisse und Ausschnittsformen wählen, um bestimmte Stromdichteverteilungen in der Leiterschleifenanordnung vorzusehen, wobei durch die Stromdichteverteilung in der Leiterschleife 7 die Magnetfeldverteilung im Rohrinneren beeinflußt werden kann. Üblicherweise gehen die Bestrebungen dahin, eine Magnetfeldverteilung über den Querschnitt des Meßrohres zu realisieren, die dahingehend optimiert ist, daß in bezug auf den Meßspannungsabgriff an den Meßelektroden alle Flächenelemente des Rohrquerschnittes nahezu gleich bewertet werden, sofern sie von gleichen Flüssigkeitsströmungsmengen durchströmt werden.

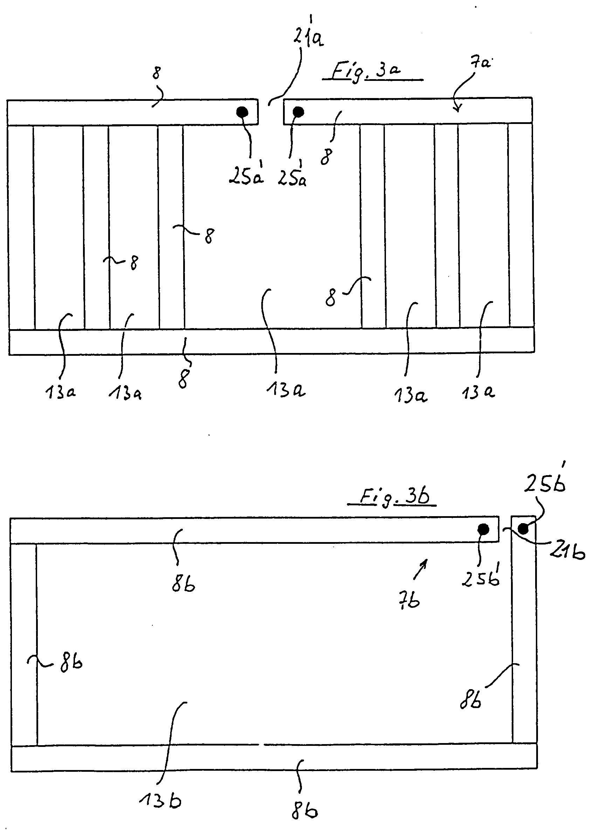

Fig. 3a zeigt eine Blechteil-Leiterschleifenanordnung 7a für einen erfindungsgemäßen magnetisch-induktiven Durchflußmesser, welche aus einzelnen, fest miteinander verbundenen Blechstreifen 8 gebildet ist. Elemente in Fig. 3a, die Elementen der Anordnung in Fig. 1 wirkungsmäßig entsprechen, sind mit entsprechend gleichen Bezugsziffern versehen, so daß auf die Beschreibung zu Fig. 1 Bezug genommen werden kann. Als Besonderheit kommt bei der Ausführungsform nach Fig. 3a hinzu, daß mehrere Ausschnitte 13a gebildet sind, wobei jedoch zum Betrieb der Leiterschleifenanordnung nach Fig. 3a lediglich zwei Stromanschlußpunkte 25a' erforderlich sind.

Fig. 3b zeigt ein weiteres Ausführungsbeispiel einer Blechteil-Leiterschleifenanordnung 7b aus fest miteinander verbundenen Blechstreifen 8b, wobei jedoch nur ein Ausschnitt 13b vorgesehen ist.

Fig. 4a zeigt ein gebrochen dargestelltes Segment eines Meßrohrs 3 eines magnetisch-induktiven Durchflußmessers nach der Erfindung in einer Querschnittsdarstellung.

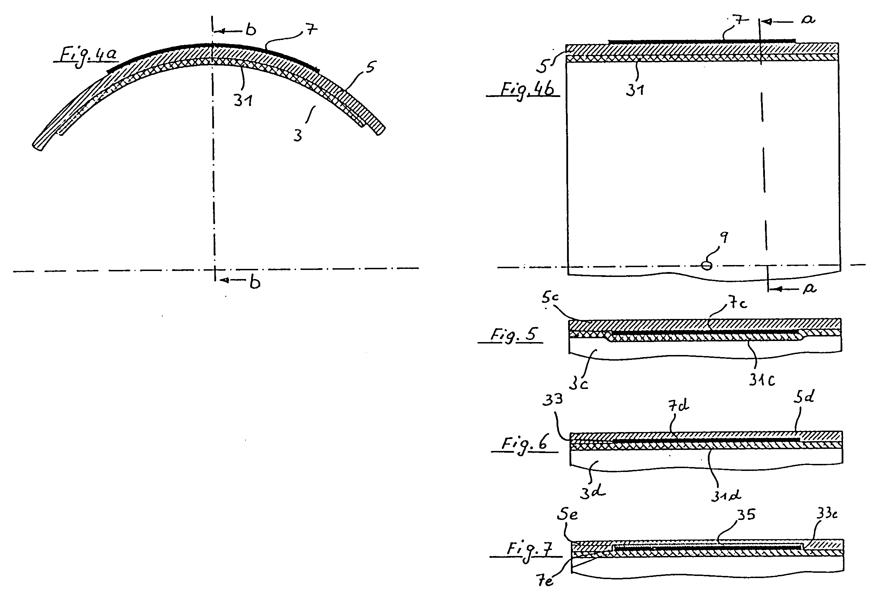

Fig. 4b zeigt einen Längsschnitt durch das Meßrohr nach Fig. 4a, wobei Fig. 4b ebenfalls nur ein herausgebrochen dargestelltes Segment des Meßrohres 3 zeigt.

Der Aufbau des Meßrohres nach den Figuren 4a und 4b entspricht im wesentlichen dem Aufbau nach Fig. 1. Am Außenumfang des aus nichtmagnetisierbarem Material hergestellten Rohrkörpers 5 sind zwei über den Durchmesser des Rohrkörpers 5 hinweg einander gegenüberliegende Blechteil-Leiterschleifenanordnungen 7 angeordnet, von denen in den Figuren 4a und 4b nur eine gezeigt ist. Mit 31 ist in den Figuren 4a und 4b eine innere Rohrauskleidung aus nichtmagnetischem Material bezeichnet. Eine derartige Innenauskleidung wird häufig herangezogen, um das Meßrohr, sofern es elektrisch leitend ist, zum Rohrinneren hin elektrisch zu isolieren und ferner eine gegenüber der Flüssigkeit chemisch resistente Schutzschicht vorzusehen.

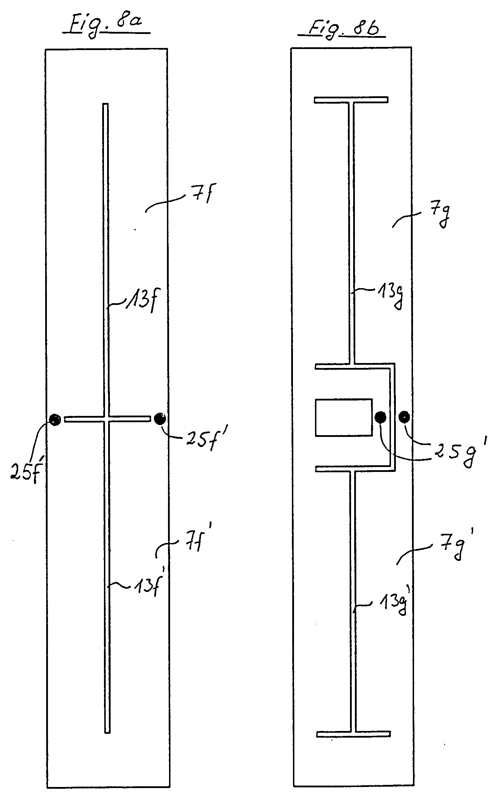

Die Figuren 5 - 7 zeigen jeweils einen herausgebrochen dargestellten Teil weiterer Meßrohre für magnetisch-induktive Durchflußmesser nach der Erfindung in einem Längsschnitt ähnlich der Fig. 4b.

Elemente in den Figuren 5 - 7, die Elementen der Fig. 1 bzw. 4a und 4b wirkungsmäßig entsprechen, sind mit entsprechend gleichen Bezugsziffern und einem nachgestellten Kleinbuchstaben gekennzeichnet.

Bei dem Ausführungsbeispiel nach Fig. 5 besteht der Rohrkörper 5c aus einem magnetisierbaren Material, etwa aus einem herkömmlichen Stahl. Die Blechteil-Leiterschleifenanordnungen 7c, von denen in den Figuren 5 - 7 jeweils nur eine gezeigt ist, befinden sich am Innenumfang des Rohrkörpers 5c und sind zum Rohrinneren hin von dem Auskleidungsmaterial 31c abgedeckt.

Ein besonderer Vorteil des Schichtenaufbaus nach Fig. 5 besteht darin, daß der Rohrkörper 5c die Aufgabe der magnetischen Rückführung übernehmen kann.

Die Anordnung gemäß Fig. 6 unterscheidet sich von der nach Fig. 5 lediglich dadurch, daß die Blechteil-Leiterschleifenanordnung 7d in einer Ausnehmung 33 am Innenumfang des Rohrkörpers 5d angeordnet ist.

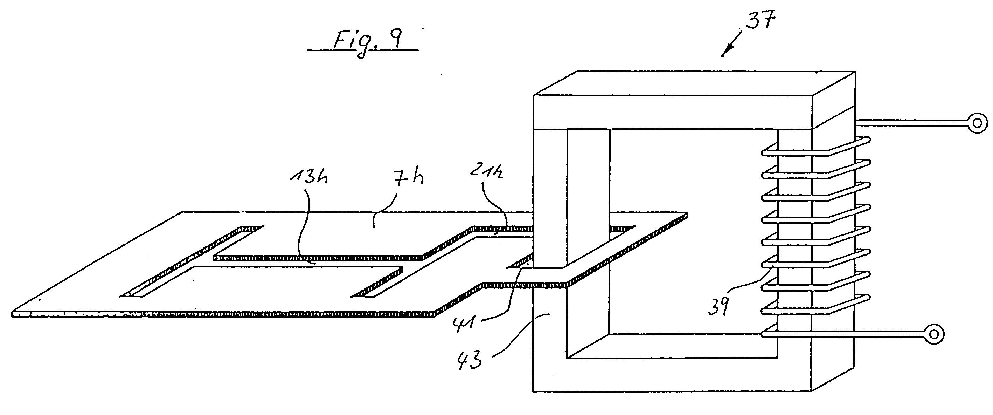

Bei dem Meßrohr nach Fig. 7 besteht der Rohrkörper 5e aus einem nichtmagnetischen Material. In einer Ausnehmung 33e am Innenumfang des Rohrkörpers 5e sind die Blechteil-Leiterschleifenanordnungen 7e und ein magnetisch rückführendes Blech 35 angeordnet, das sich über die radial außen liegenden Flachseiten der Leiterschleifenanordnungen 7e erstreckt. Ein Vorteil der Konstruktion nach Fig. 7 besteht darin, daß aufgrund der magnetischen Rückführung durch das Magnetblech 35 die Entstehung von Wirbelströmen in dem Rohrkörper 5e wirksam unterbunden werden kann. Das Magnetblech 35 kann alternativ auch am Außenumfang des Rohrkörpers 5e vorgesehen sein.

Fig. 8a zeigt den ungebogenen Zuschnitt eines einteilig zusammenhängenden Blechteils mit zwei Leiterschleifenanordnungen 7f und 7f', die in der gebogenen Montageanordnung am Meßrohr in der Weise einander gegenüberliegen, daß sie das gewünschte Magnetfeld quer zur Strömungsrichtung der Flüssigkeit erzeugen können. Ein besonderer Vorteil des in Fig. 8a gezeigten Leiterschleifenpaares 7f, 7f' aus einem einzigen Blechteil besteht darin, daß lediglich zwei Stromanschlußpunkte 25f' für die gemeinsame Stromversorgung beider Leiterschleifen 7f, 7f' erforderlich sind. Die einteilige Anordnung nach Fig. 8a hat darüber hinaus herstellungstechnische und montagetechnische Vorteile und kann ferner eine mechanisch aussteifende Funktion beispielsweise für einen Rohrkörper aus Kunststoff erfüllen.

Entsprechendes gilt für den Zuschnitt nach Fig. 8b, der ebenfalls ein Leiterschleifenpaar 7g, 7g' bildet. Das Blechteil nach Fig. 8b unterscheidet sich von dem Blechteil nach Fig. 8a lediglich durch die Geometrie des Ausschnitts 13g und die Lage der Stromanschlußpunkte 25g'. Selbstverständlich läßt sich der durch die Ausführungsbeispiele in den Figuren 8a und 8b zum Ausdruck kommende Erfindungsgedanke, ein Leiterschleifenpaar mit einem einteilig zusammenhängenden Blechteil zu realisieren, auch mit anderen Umrißgeometrien und Gestaltungen des Ausschnittes verwirklichen.

Fig. 9 zeigt eine an einem Meßrohr anzuordnende Blechteil-Leiterschleifenanordnung 7h für einen erfindungsgemäßen Durchflußmesser, welche als Sekundärstromkreis eines Transformators 37 ausgebildet ist, dessen Primärkreis eine Wickelspule 39 umfaßt. Der Transformator 37 ist so dimensioniert, daß in der Blechteil-Leiterschleifenanordnung 7h die geforderten hohen Ströme für die Erzeugung des Magnetfeldes in dem betreffenden Rohrkörper induziert werden. Wie aus Fig. 9 zu erkennen ist, hat der Ausschnitt 13h einen Sekundärabschnitt 41, der von einem Schenkel 43 des Transformatorkerns durchsetzt ist.

Bei der Lösung nach Fig. 9 entfallen daher gesonderte Stromanschlußpunkte für die Leiterschleifenanordnung 7h.

## Patentansprüche

1. Magnetisch-induktiver Durchflußmesser
- mit einem Meßrohr (3)'
- einer Elektromagnet-Einrichtung mit wenigstens einer elektrischen Leiterschleifenanordnung (7, 7') zur Erzeugung eines das Meßrohr (3) quer zu dessen Rohrlängsachse durchsetzenden Magnetfeldes und
- wenigstens zwei Meßelektroden (9, 9'), die quer zur Längsachse des Meßrohres (3) einander gegenüberliegend derart angeordnet sind, daß mit ihnen eine aufgrund der quer zu dem Magnetfeld verlaufenden Strömung einer das Meßrohr durchfließenden Flüssigkeit induzierte Meßspannung abgegriffen werden kann,
**dadurch gekennzeichnet,**
daß die elektrische Leiterschleifenanordnung (7, 7') aus einem elektrisch leitfähigen, an der Innenseite oder an der Außenseite des Meßrohrkörpers (5) angeordneten Blechteil besteht, das mit wenigstens einem Ausschnitt (13) als innenliegende Begrenzung eines um den Ausschnitt (13) in dem Blechmaterial verlaufenden Leiterschleifenstrompfades versehen ist.

2. Magnetisch-induktiver Durchflußmesser nach Anspruch 1, **dadurch gekennzeichnet,** daß das Blechteil (7) als zusammenhängend einteiliges Blech ausgebildet ist.

3. Magnetisch-induktiver Durchflußmesser nach Anspruch 1 oder 2, **dadurch gekennzeichnet,** daß das Blechteil (7) aus Aluminium, Kupfer, einer Aluminiumlegierung oder Kupferlegierung besteht.

4. Magnetisch-induktiver Durchflußmesser nach einem der vorhergehenden Ansprüche, **dadurch gekennzeichnet,** daß das Blechteil (7) eine Blechdicke in dem Bereich von 0,5 mm bis 3,5 mm, insbesondere in dem Bereich von 0,5 mm bis 2 mm hat.

5. Magnetisch-induktiver Durchflußmesser nach einem der vorhergehenden Ansprüche, **dadurch gekennzeichnet,** daß der Ausschnitt (13) ein Stanzloch ist.

6. Magnetisch-induktiver Durchflußmesser nach einem der vorhergehenden Ansprüche, **dadurch gekennzeichnet,** daß der Umriß des Blechteils (7) in bezug auf eine Längsmittenlinie (15) des Blechteils symmetrisch ist, die in einer orthogonal zu der Längsachse des Meßrohrs (3) liegenden Ebene verläuft, und daß der Ausschnitt (13) einen entlang der Längsmittenlinie (15) und in bezug auf die Längsmittenlinie (15) symmetrisch verlaufenden Abschnitt aufweist.

7. Magnetisch-induktiver Durchflußmesser nach Anspruch 6, **dadurch gekennzeichnet,** daß das Blechteil (7) einen länglichen Zuschnitt mit insbesondere rechteckigem Umriß hat und daß der in bezug auf die Längsmittenlinie (15) symmetrische Abschnitt des Ausschnittes (13) ein Schlitz mit im wesentlichen geraden Rändern ist.

8. Magnetisch-induktiver Durchflußmesser nach einem der vorhergehenden Ansprüche, **dadurch gekennzeichnet,** daß der Ausschnitt (13) einen zu einem Randbereich des Blechteils (7) offenen Unterbrechungsabschnitt (21) aufweist, der die von dem Blechteil (7) gebildete und um den Ausschnitt (13) herum verlaufende Leiterschleife unterbricht, und daß das Blechteil an benachbarten Stellen beiderseits dieser Unterbrechung mit der Versorgungsstromquelle verbunden ist.

9. Magnetisch-induktiver Durchflußmesser nach einem der vorhergehenden Ansprüche, **dadurch gekennzeichnet,** daß das Blechteil (7) im wesentlichen entsprechend der Umfangskrümmung des Meßkörpers (5) gebogen ist und mit einer Flachseite eng an dem Meßrohrkörper (5) anliegt.

10. Magnetisch-induktiver Durchflußmesser nach einem der Ansprüche 1 bis 5, **dadurch gekennzeichnet,** daß die Versorgungsstromquelle für die Leiterschleifenanordnung (7a) einen Transformator (37) umfaßt und daß der Ausschnitt (13h) vom Kern des Transformators (37) durchsetzt ist, so daß der um den Ausschnitt (13h) herum verlaufende Leiterschleifenstrompfad einen Sekundärstromkreis des Transformators (37) bildet.

11. Magnetisch-induktiver Durchflußmesser nach einem der vorhergehenden Ansprüche, **dadurch gekennzeichnet,** daß das Meßrohr (3c; 3d) einen Meßrohrkörper (5c; 5d) aus einem magnetisierbaren Material, insbesondere Stahl oder Gußeisen, aufweist und daß das Blechteil (7c; 7d) am Innenumfang des Meßrohrkörpers (5c; 7d) angeordnet ist.

12. Magnetisch-induktiver Durchflußmesser nach Anspruch 11, **dadurch gekennzeichnet,** daß das Blechteil (7d) in einer Vertiefung (33) des Meßrohrkörpers (5d) angeordnet ist.

13. Magnetisch-induktiver Durchflußmesser nach Anspruch 11 oder 12, **dadurch gekennzeichnet,** daß der Meßrohrkörper (5c; 5d) an seinem Innenumfang mit einem nichtmagnetisierbaren Material ausgekleidet ist, das auch das Blechteil (7c; 7d) zum Rohrinneren hin abdeckt.

14. Magnetisch-induktiver Durchflußmeser nach einem der Ansprüche 1 bis 10, **dadurch gekennzeichnet,** daß das Meßrohr (3) einen Meßrohrkörper (5) aus einem nichtmagnetisierbaren Material aufweist und daß das Blechteil (7) am Außenumfang oder am Innenumfang des Meßrohrkörpers (5) angeordnet ist.

15. Magnetisch-induktiver Durchflußmesser nach einem der vorhergehenden Ansprüche, **dadurch gekennzeichnet,** daß die Elektromagnetanordnung zwei Leiterschleifenanordnungen (7, 7') nach einem der vorhergehenden Ansprüche aufweist, die quer zur Längsachse des Meßrohres (3) einander gegenüberliegend am Meßrohr (3) angeordnet sind.

16. Magnetisch-induktiver Durchflußmesser nach Anspruch 15, **dadurch gekennzeichnet,** daß die beiden Leiterschleifenanordnungen (7f, 7f'; 7g, 7g') aus einem zusammenhängend einteiligen Blech bestehen und über zwei, beiden Leiterschleifenanordnungen (7f, 7f'; 7g, 7g') gemeinsame Anschlüsse (25f'; 25g') mit der Versorgungsstromquelle verbunden sind.
